# EUROPEAN PATENT APPLICATION

(11) **EP 2 060 900 A2**
(43) Date of publication of application: **20.05.2009**
(21) Application number: 08019649.6
(22) Date of filing: 11.11.2008
(51) Int. Cl.: G01N 1/36

(54) **Biopsy sample mount and processing method**

(30) Priority: 13.11.2007 US 987576 P
(71) Applicant: Mayo Foundation for Medical Education and Research, Rochester, MN 55905 (US)
(72) Inventor: Schuyler O. Sanderson, Rochester, MN 55901 (US)
(74) Representative: Hauck Patent- und Rechtsanwälte

(57) **Abstract**

A biopsy sample mount and processing method. One embodiment of the sample mount includes a rounded mass of hydrophilic or liquid absorbing material. Tissue samples can be releasably placed on the material mass in a known structural orientation and the mount and sample immersed in fixative. The mass of material will swell when absorbing the fixative, causing the tissue sample to release from the mass of material. The tissue sample is then removed from the fixative and correctly oriented for tissue processing for diagnostic use.

## Description

### TECHNICAL FIELD

The invention is a biopsy sample mount and a method for processing biopsy samples.

### BACKGROUND

Mucosal biopsies from the gastrointestinal tract are collected for diagnosis and small bowel biopsy is an example of a diagnostic procedure in which a tissue sample of the small bowel lining is removed for examination. An endoscopic biopsy forceps is commonly used to collect the sample. The biopsy forceps is an elongated and flexible member having a sample collection tool in the form of a pair of pivotally-mounted opposed cups on its end. During the biopsy the forceps is inserted into the patient through their mouth, nose or rectum and advanced to the small bowel to position the collection tool adjacent to the tissue to be sampled. The tool is then actuated to cut and collect the sample. After the forceps is removed from the patient's body the collection tool is opened and the biopsy sample removed with forceful agitation or with a separate tool or instrument. The sample is typically then placed in a fixative before being transferred to a laboratory for processing and slide examination.

When placed in the fixative the samples sometimes ball-up or otherwise change shape. If this occurs the laboratory technicians will need to manipulate the sample and flatten it out before it can be mounted to the examination slide. This process can reduce the efficiency of the preparation process. The orientation of the sample can also sometimes be lost during this preparation process. Pathologists or other clinicians performing diagnostic procedures with the sample may want to know which side of the sample was originally attached to the bowel (the basal or lateral side) and which side was originally facing the inside of the bowel (the luminal or apical side). If the orientation of the sample is lost during the preparation process, this information cannot be conveyed to the diagnostic clinician.

There is, therefore, a need for improved biopsy sample processing methods and associated tools. In particular, there is a need for methods and tools that enhance the efficiency and accuracy of the tissue sample preparation process.

### BRIEF DESCRIPTION OF THE DRAWINGS

Figure 1 is an illustration of a tissue mount in accordance with one embodiment of the invention.
Figures 2A-2G are schematic and diagrammatic illustrations of steps of a tissue processing method in accordance with another embodiment of the invention using the tissue mount shown in Figure 1.

### DETAILED DESCRIPTION

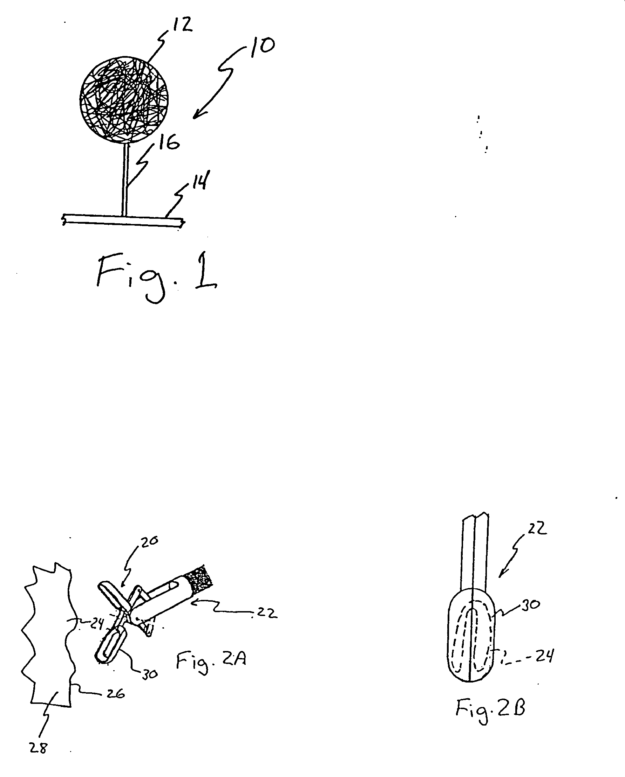

Figure 1 is an illustration of a tissue mount 10 in accordance with one embodiment of the invention. Mount 10 includes a material mass 12 of hydrophilic or other liquid-absorbing material supported over a base 14 by a structure such as pin 16. Material mass 12 can, for example, be polymer foam, sponge or paper. In some embodiments of the invention the material mass 12 can also include a desiccant to keep the bulk of the mass dry prior to use. The illustrated embodiment of the material mass 12 has a generally spherical shape, but other embodiments of the invention have material masses with other geometrical solid or three-dimensional forms, including asymmetrical, irregular and non-round surfaces. For example, in one embodiment only an upper, tissue-receiving surface of the material mass 12 has a round shape. Still other embodiments of the invention include a kit having multiple tissue mounts 10 on a common base. Pin 16 can be removably supported in the base 14, enabling the pin and material mass 12 to be relatively easily removed from the base during tissue processing procedures. Alternatively or in addition, the material mass 12 can be removably mounted to the pin 16. Still other embodiments of the invention do not include a pin or other structure for supporting the material mass 12.

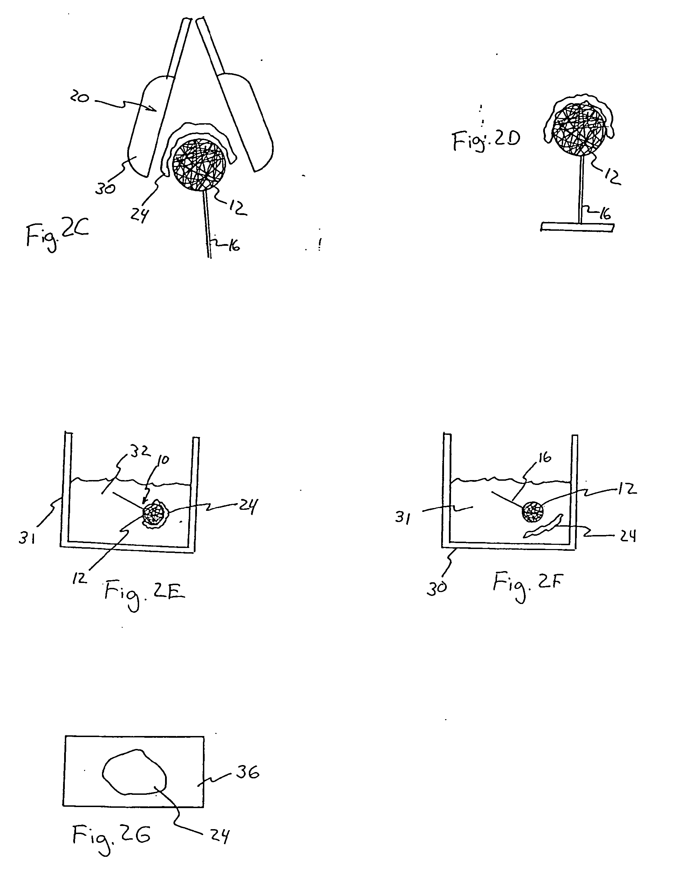

Figure 2A-2G are schematic/diagrammatic illustrations of several steps of a biopsy sample processing method in accordance with another embodiment of the invention. Figure 2A shows the collection tool 20 of a biopsy forceps 22 approaching tissue 24 extending on the interior wall 26 within the lumen of a small bowel 28. The cups 30 of the collection tool 20 are shown in their open position in Figure 2A. In Figure 2B the cups 30 are shown in their closed position, with the collection tool 20 enclosing the sample of tissue 24 removed from the bowel 28. After the biopsy forceps 22 are removed from the patient, the collection tool 20 is opened and the sample of tissue 24 is removed from the cups 30 as shown in Figure 2C.

As shown in Figure 2D, the sample of tissue 24 is then positioned on the material mass 12 of the mount 10. Since the material mass 12 has a three-dimensional shape, at least portions of the sample of tissue 24 will typically wrap around the material mass. A technician can, although need not, grasp and manipulate the sample of tissue 24 in the course of removing it from the collection tool 20 and positioning it on the mount 10. During this mounting process a known side of the sample of tissue 24 can be positioned on the material mass 12 (i.e., the basal or luminal side can be positioned on the material mass) so the structural orientation of the sample of tissue is retained for future reference by the technician. The material mass 12 will typically be in a dry state when the sample of tissue 24 is positioned on its surface. The interaction of the surface characteristics of the material mass 12 and sample of tissue 24 will typically provide sufficient forces to retain the sample of tissue on the material mass for subsequent processing steps. Alternatively, the material mass 12 can be wetted with a fixative or other liquid before the sample of tissue 24 is positioned on the material mass. In still other embodiments of the invention (not shown) structures such as pins or substances having adhesive qualities can be used to enhance the adhesion of the sample of tissue 24 to the material mass 12, yet still enable the sample of tissue to be relatively easily and conveniently removed from the material mass during the steps described below.

As shown in Figure 2E, preservative or fixative 32 is then exposed or applied to the mount 10 holding the sample of tissue 24. In the embodiment shown in Figure 2E, this fixative exposure is performed by immersing the mount 10 with the sample of tissue 24 in a container 31 of fixative 32. The sample of tissue 24 and the material mass 12 will absorb the fixative during this exposure. As shown in Figure 2F, the sample of tissue 24 may release from the material mass 12 during its exposure to the fixative. The material mass 12 may swell and increase in size when exposed to the fixative 32, enhancing the potential that the sample of material 24 will release from the material mass without intervention from the clinician. Alternatively, the clinician can manually remove the sample of tissue 24 from the material mass 12 after it is exposed to the fixative 32.

After the sample of tissue 24 is removed from the fixative 32 and mount 10 it can be further processed. In the embodiment shown in Figure 2G, for example, the sample of tissue 24 is mounted to a slide 36 for viewing by a clinician. Since the structural orientation of the sample of tissue 24 is retained and known throughout the processing steps described above, the tissue sample can be positioned on the slide in a desired orientation.

The tissue mount and processing method of the invention offer important advantages. In particular, the processing method can be efficiently performed, and provides high quality tissue samples. The shape integrity of the sample can be maintained and the structural orientation of the sample retained and known throughout the process. The mount releasably holds the samples and enables technicians to efficiently perform the processing operation.

Although the invention has been described with reference to preferred embodiments, those skilled in the art will recognized that changes can be made in form and detail without departing from the spirit and scope of the claims. For example, although described in connection with a small bowel biopsy, the tissue mount and processing method can be used in connection with other tissue samples.

## Claims

1. A tissue mount including a mass of hydrophilic or liquid absorbing material.

2. The tissue mount of claim 1 and further including a support structure extending from the material mass.

3. The tissue mount of claim 2 and further including a base for releasably receiving and holding the support structure.

4. The tissue mount of any of claims 1-3 wherein the material mass includes a curved surface.

5. The tissue mount of any of claims 1-3 wherein the material mass is generally round.

6. The tissue mount of any of claim 1-5 and further including a desiccant in the material mass.

7. A method for processing a tissue sample using the tissue mount of any of claims 1-6, including placing a tissue sample on the material mass.

8. The method of claim 7 wherein placing the tissue sample includes wrapping the sample around a non-planar surface on the material mass.

9. The method of any of claims 7 and 8 wherein placing the tissue sample on the material mass includes releasably securing the tissue sample on the material mass.

10. The method of claim 9 wherein releasably securing the tissue sample on the material mass includes placing the tissue sample on the material mass free from attaching structures such as pins or attaching substances such as adhesives.

11. The method of any of claims 7-10 wherein placing the tissue sample includes placing the tissue sample on the material mass in a known structural orientation.

12. The method of any of claims 7-11 and further including exposing the material mass and tissue sample to a preservative or fixative.

13. The method of claim 12 wherein exposing the material mass and tissue sample includes immersing the material mass and tissue sample in a container of preservative or fixative.

14. The method of any of claims 7-13 wherein exposing the material mass and tissue sample includes causing the material mass to swell with the absorption of preservative or fixative.

15. The method of claim 14 wherein exposing the material mass and tissue sample includes causing the material mass to swell with the absorption of preservative or fixative and to release the tissue sample.

16. The method of any of claims 7-15 and further including ending the exposure of the tissue sample and optionally the material mass to the preservative or fixative.

17. The method of claim 16 wherein ending the exposure includes removing the tissue sample and optionally the material mass from a container of preservative or fixative.

18. The method of any of claims 16 and 17 and further including further processing the tissue sample.

19. The method of claim 18 wherein further processing the tissue sample includes processing the tissue sample in a known structural orientation.

20. The method of any of claims 18 and 19 wherein further processing the tissue sample includes mounting the tissue sample on a slide.
